# EUROPÄISCHE PATENTSCHRIFT

(11) **EP 3 718 075 B1**
(45) Veröffentlichungstag und Bekanntmachung des Hinweises auf die Patenterteilung: **22.03.2023**
(21) Anmeldenummer: 18814846.4
(22) Anmeldetag: 03.12.2018
(51) Int. Cl.: B42D 25/309, G06T 5/40, G06T 5/00, G06T 7/11

(54) **VERFAHREN ZUR HERSTELLUNG EINES PERSONEN PORTRÄTS FÜR EIN AUSWEISDOKUMENT**
METHOD FOR PRODUCING A PERSONAL PORTRAIT FOR AN IDENTITY DOCUMENT
PROCÉDÉ DE FABRICATION D'UN PORTRAIT DE PERSONNE POUR UN DOCUMENT D'IDENTITÉ

(30) Priorität: 01.12.2017 DE 102017011132
(43) Veröffentlichungstag der Anmeldung: 07.10.2020
(73) Patentinhaber: Muehlbauer GmbH & Co. KG, 93426 Roding (DE)
(72) Erfinder: ZEITZLER, Anton, 93426 Roding (DE); WANJEK, Michael, 93149 Nittenau (DE)
(74) Vertreter: Schmidt, Steffen J.
(86) Internationale Anmeldenummer: PCT/EP2018/083311
(87) Internationale Veröffentlichungsnummer: WO 2019/106204

(56) Entgegenhaltungen:
- EP-A2- 2 509 044
- DE-A1-102014 110 852
- US-A1- 2004 184 671
- WESZKA J S: "A SURVEY OF THRESHOLD SELECTION TECHNIQUES", COMPUTER GRAPHICS AND IMAGE PROCESSING, ACADEMIC PRESS. NEW YORK, US, Bd. 7, Nr. 2, 1. April 1978 (1978-04-01), Seiten 259-265, XP001149105, DOI: 10.1016/0146-664X(78)90116-8

## Beschreibung

### Hintergrund

Hier wird ein Verfahren und ein korrespondierendes Computerprogrammprodukt zur Herstellung eines Personenporträts für ein Ausweisdokument beschrieben. Insbesondere wird ein Verfahren beschrieben, welches sich zur Herstellung eines Personenporträts eignet, welches mittels einer Lasermarkierungsvorrichtung unveränderlich auf ein Ausweis- oder Sicherheitsdokument übertragen werden soll. Auch Aspekte eines Ausweisdokuments sind sowohl in der Beschreibung, als auch in den Figuren und den Ansprüchen definiert.

Beim Übertragen von Bildinformationen, insbesondere von Personenporträts, auf Ausweisoder Sicherheitsdokumente mittels einer Lasermarkierungsvorrichtung besteht allgemein das Problem, dass übertragene Bildinformationen irreversibel sind und im Falle fehlerhafter oder qualitativ unzureichender Markierungen das gesamte Ausweis- oder Sicherheitsdokument zu verwerfen ist. Daher ist eine Aufbereitung von Bildinformationen, insbesondere von Personenporträts, welche mittels einer Lasermarkierungsvorrichtung auf ein Ausweis- oder Sicherheitsdokument zu übertragen sind vor dem Ausführen der eigentlichen Übertragung üblich, insbesondere um die Anzahl fehlerhafter oder qualitativ unzureichender Markierungen aufgrund zur Übertragung ungeeigneter Bildinformationen zu reduzieren.

Insbesondere im Falle einer Übertragung von Personenporträts als Graustufenbild mittels einer Lasermarkierungsvorrichtung ist es wünschenswert, die Kontraststärke von als Farbbild erstellten Personenporträts vor Beginn der Übertragung zu optimieren. Zum einen soll eine zur Verfügung stehende Graustufenskala möglichst vollständig ausgenutzt werden, zum anderen soll ein zu dunkles oder zu helles kontrastschwaches Graustufenbild vermieden werden, wie es zum Beispiel bei der Umwandlung einer Farbaufnahme dunkelhäutiger Menschen vor sehr hellen Hintergründen oder hellhäutiger Menschen vor sehr dunklen Hintergründen häufig auftritt.

### Stand der Technik

WO 2005/062978 A2 offenbart Ausweisdokumente mit einer Mehrzahl von Sicherheitsmerkmalen. Zur Verbesserung eines auf den Ausweisdokumenten gezeigten farb- oder graustufen-Personenporträts schlägt das Dokument als eine Option eine Kontrastschärfung des gezeigten Personenporträts vor, wobei hierzu das gesamte Personenporträt inkl. des Personenhintergrunds einer Bildaufarbeitungsprozedur unterzogen wird.

Das Dokument DE 102 50 781 A1 bezieht sich auf ein Verfahren zur Segmentierung eines Vordergrundobjektes in einem Bild. Dazu werden ein digitales Szenenbild mit einem zu segmentierenden Vordergrundobjekt und einem Hintergrund, und ein digitales Referenzbild, bereitgestellt, das den Hintergrund repräsentiert. Aus diesen beiden Bildern wird durch pixelweise Differenz zwischen dem Szenenbild und dem Referenzbild ein Differenzbild erzeugt. Zur Bereitstellung des Referenzbildes wird ein Hintergrundbild als Extrapolation der Pixelwerte eines Randbereichs des Szenenbildes erzeugt. Nach einem pixelweisen Vergleichen des Differenzbildes mit einem bestimmten Schwellenwert wird jedes Pixel des Szenenbildes entweder dem Hintergrund oder dem Vordergrundobjekt auf Basis des Schwellenwertvergleichs zugeordnet. Bei dieser Vorgehensweise ist der Segmentierungsschritt besonders wichtig, der als Eingangsdaten die Differenzbilder verwendet. Im Rahmen des Segmentierungsschrittes wird eine Konturenabschätzung des Personenportraits z.B. mittels eines Kantenalgorithmus vorgenommen, der das Differenzbild angewendet. Dieser liefert die im Bild vorhandenen Kanten, die im Fall eines guten Referenzbildes ausschließlich im Bereich des Vordergrundobjektes auftreten und insbesondere an dessen Übergang zum Hintergrund. Den übrigen Pixeln, die gemäß der Konturenabschätzung vorläufig dem Hintergrund zugeordnet wurden, kann z.B. der Wert eins zugewiesen werden. Als Resultat liefert der Abschätzungsschritt also eine geschätzte, binäre Schnittschablone für den Hintergrund. Durch Multiplikation des Differenzbildes mit der geschätzten Schnittschablone wird das abgeschätzte Vordergrundobjekt ausgeblendet. Es entsteht ein Bild des ausgeschnittenen Hintergrundes. Aus diesen Hintergrundpixeln wird der maximale Pixelwert bestimmt, der dann als Schwellenwert in dem nachfolgenden Vergleichsschritt zur Zuordnung jedes einzelnen Pixels des Differenzbildes zu entweder dem Vordergrundobjekt oder dem Hintergrund verwendet wird. Dieser Vergleichsschritt stellt die eigentliche Segmentierung dar.

Ein Verfahren zur Herstellung eines Personenporträts für ein Ausweisdokument wird durch DE 10 2014 110 852 A1 offenbart. Hierbei wird ein festgelegter Bildausschnitt eines Personenporträts, beispielsweise ein Oval, ausgewählt und mittels eines Bildaufarbeitungsverfahrens nachbearbeitet. Eine Abgrenzung zwischen der gezeigten Person und einem Personenhintergrund erfolgt im Zuge des Bildaufarbeitungsverfahrens nicht. Vielmehr wird der festgelegte Bildausschnitt so gewählt, dass dieser in etwa die Form eines menschlichen Gesichts umreißt, sodass zumindest der anteilsmäßig überwiegende Teil des Personenhintergrunds nicht durch das Bildaufarbeitungsverfahren erfasst wird und dieses somit weniger verfälscht.

Die DE 10 2014 110 852 A1 betrifft insbesondere eine Vorgehensweise, um den Aufwand bei der Anpassung und Umrechnung der digitalen Darstellung der Portraitansicht für die unterschiedlichen Wiedergaben zu verringern. Dazu wird ein Verfahren vorgeschlagen zum Herstellen von Sicherheitsdokumenten mit jeweils einer individuellen Portraitansicht in unterschiedlichen Wiedergaben mit Durchführungsabschnitten zum Bereitstellen digital codierter Darstellungen zu den individuellen Portraitansichten, zum Festlegen jeweils eines Bildausschnitts innerhalb der visuellen Wiedergaben auf den Sicherheitsdokumenten, zum Ermitteln statistischer Merkmale der Tonwertverteilung für die digital codierten Darstellungen in Bezug auf den jeweils festgelegten Bildausschnitt, zum Anpassen der Tonwerte innerhalb des jeweils festgelegten Bildausschnitts, insbesondere zum monotonen Anpassen, Spreizen, Verdichten, Skalieren und/ oder Limitieren der Tonwerte, in den digital codierten Darstellungen in Abhängigkeit von den ermittelten statistischen Merkmalen in Bezug auf jede der visuellen Wiedergaben gemäß der damit erzielbaren Dynamik, Helligkeits- und/oder Farbauflösung und zum Anlegen der visuellen Wiedergaben während der Herstellung und/oder Personalisierung der Sicherheitsdokumente entsprechend den jeweils tonwert-skalierten digital codierten Darstellungen.

Das Dokument EP 2 509 044 A1 offenbart ein Bildaufbereitungsverfahren, bei dem ein gewichtetes Histogramm basierend auf einer Farbwertverteilung von Bildpunkten erstellt wird. Das Verfahren kann hierbei zwischen Bildpunkten, die einem Personenporträt zugeordnet sind, und Bildpunkten, die keinem Personenporträt zugeordnet sind, unterscheiden.

Weiterer technologischer Hintergrund ist in der US 2002/0172419 A1 offenbart.

### Problem

Trotz bekannter Verfahren zur Herstellung von Personenporträts für Ausweisdokumente besteht weiter Bedarf an verbesserten Herstellungsverfahren. Insbesondere verfälscht das vollständige oder zumindest teilweise Miteinbeziehen von Bildinformationen, welche einem Personenhintergrund zugehörig sind, erheblich eine Kontrastverbesserung von Graustufenbildern.

Somit besteht die Aufgabe, ein Verfahren und ein Computerprogrammprodukt bereitzustellen, welche eine Kontrastverbesserung von Graustufenbildern von Personenporträts für Ausweis- und Sicherheitsdokumente ermöglichen, insbesondere um diese für eine Übertragung mit einem Lasermarkierungsgerät zu optimieren.

### Vorgeschlagene Lösung

Die Erfindung ist durch die Ansprüche 1 und 8 definiert. Weitere vorteilhafte Ausgestaltungen des Verfahrens nach dem Anspruch 1 werden durch die Ansprüche 2 bis 7 definiert.

Ein Verfahren zur Herstellung eines Personenporträts für ein Ausweisdokument umfasst die Schritte:
a) Erfassen eines Personenporträts, welches zumindest einen Teil einer Person und einen Hintergrund der Person zeigt, mit einer bildgebenden Vorrichtung, zum Beispiel mit einem Scanner oder einer Digitalkamera;
b) Segmentieren des Personenporträts in Bildpunkte, wobei jedem Bildpunkt ein Farbwert einer Farbskala zugeordnet ist;
c) Klassifizieren der einzelnen Bildpunkte des Personenporträts, jeweils entweder als zu der gezeigten Person gehörig oder als zu dem gezeigten Hintergrund der Person gehörig;
d) Ermitteln eines ersten Wertes auf der Farbskala und eines zweiten Wertes auf der Farbskala, wobei der zweite Wert insbesondere größer als der erste Wert ist;
e) Zuordnen der Bildpunkte, welche als zu der gezeigten Person gehörig klassifiziert sind, zu einem Grauwert einer Grauskala, wobei
   - Bildpunkte mit einem Farbwert unterhalb des ersten Wertes auf der Farbskala jeweils zu dem niedrigsten möglichen Grauwert der Grauskala zugeordnet werden, und
   - Bildpunkte mit einem Farbwert oberhalb des zweiten Wertes auf der Farbskala jeweils zu dem höchsten möglichen Grauwert der Grauskala zugeordnet werden, und
   - Bildpunkte mit Farbwerten, die größer oder gleich dem ersten Wert auf der Farbskala und gleichzeitig kleiner oder gleich dem zweiten Wert auf der Farbskala sind, jeweils einem Grauwert zwischen dem niedrigsten möglichen Grauwert und dem höchsten möglichen Grauwert zugeordnet werden;
f) Ausgeben von zumindest von jenen Bildpunkten, welche als zu der gezeigten Person gehörig klassifiziert sind und/oder einem Grauwert der Grauskala zugeordnet sind, insbesondere an eine Lasermarkierungsvorrichtung, für die Übertragung auf das Ausweisdokument.

### Vorteile, Ausgestaltungen

Ein Vorteil des Verfahrens besteht darin, dass lediglich Bildinformationen/ Bildpunkte, welche als zu einer gezeigten Person gehörig klassifiziert sind, zur Übertragung auf ein Graustufenbild herangezogen werden. Bildinformationen/ Bildpunkte, welche als zu einem Hintergrund einer Person gehörig klassifiziert sind, verfälschen/beeinflussen somit nicht die Zuordnung der Bildpunkte, welche als zu der gezeigten Person gehörig klassifiziert sind, zu den Grauwerten einer Grauskala.

Ein weiterer Vorteil des Verfahrens besteht darin, dass der vollständige Wertebereich der Grauskala für die Erstellung eines Personenporträts für ein Sicherheits- oder Ausweisdokument genutzt wird. Hierdurch wird eine erhöhte Kontraststärke eines Graustufenbildes erreicht.

Zudem können Bildinformationen/ Bildpunkte, welche einen Farbwert aufweisen, der größer als der erste Farbwert und kleiner als der zweite Farbwert ist, (und somit lediglich einem Teil bzw. Abschnitt des gesamten Wertebereichs der Farbskala entstammen) über den gesamten Wertebereich der Grauskala zugeordnet bzw. auf diesen verteilt werden. Dies ermöglicht zum Beispiel ein Spreizen der zugeordneten Farbwerte/Grauwerte unter Ausnutzung des vollständigen Wertebereiches der Grauskala und somit eine weitere Verbesserung der Kontraststärke des Graustufenbildes.

Die Farbskala kann zum Beispiel 256 Farbwerte haben/aufweisen und die Grauskala kann 256 Grauwerte haben/aufweisen. Vorteilhaft ist es, wenn die Grauskala zumindest so viele Werte wie die Farbskala umfasst/aufweist, um eine Kontrastverbesserung zu befördern. Jedoch ist dies nicht zwingend notwendig.

In einer Variante werden der erste Wert auf der Farbskala und der zweite Wert auf der Farbskala so ermittelt, dass:
- der zweite Wert auf der Farbskala größer als der erste Wert auf der Farbskala ist, und/oder
- ein erster vorbestimmter Anteil der als zu der gezeigten Person gehörig klassifizierten Bildpunkte jeweils Farbwerte unterhalb des ersten Wertes auf der Farbskala aufweist, und/oder
- ein zweiter vorbestimmter Anteil der als zu der gezeigten Person gehörig klassifizierten Bildpunkte jeweils Farbwerte aufweist, die größer oder gleich dem ersten Wert auf der Farbskala und gleichzeitig kleiner oder gleich dem zweiten Wert auf der Farbskala sind, und/oder
- ein dritter vorbestimmter Anteil der als zu der gezeigten Person gehörig klassifizierten Bildpunkte jeweils Farbwerte oberhalb des zweiten Wertes auf der Farbskala aufweist.

In einem Ausführungsbeispiel kann der erste vorbestimmte Anteil 2% - 8%, zum Beispiel 4% der als zu der gezeigten Person gehörig klassifizierten Bildpunkte umfassen. Hierbei haben (die 4%) der Bildpunkte, die als zu der gezeigten Person gehörig klassifiziert sind, mit den relativ niedrigsten Farbwerten jeweils einen Farbewert, der kleiner als der erste Wert auf der Farbskala ist.

In einem Ausführungsbeispiel kann der zweite vorbestimmte Anteil 84% - 98%, zum Beispiel 92% der als zu der gezeigten Person gehörig klassifizierten Bildpunkte umfassen.

In einem Ausführungsbeispiel kann der dritte vorbestimmte Anteil 2% - 8%, zum Beispiel 4% der als zu der gezeigten Person gehörig klassifizierten Bildpunkte umfassen. Hierbei haben die (4% der) Bildpunkte, die als zu der gezeigten Person gehörig klassifiziert sind, mit den relativ höchsten Farbwerten jeweils einen Farbewert, der größer als der zweite Wert auf der Farbskala ist.

Ein Vorteil hierbei ist, dass fehlerhafte bzw. farblich besonders stark abweichende Bildpunkte ("Pixelfehler") und/oder Bildpunkte mit besonders hohen oder niedrigen Farbwerten, wie sie zum Beispiel im Bereich der Augen einer durch das Personenporträt gezeigten Person auftreten können, einheitlich einem Extremwert auf der Grauskala zugewiesen werden. Somit steht für die verbleibenden Bildpunkte, welche jeweils einen Farbwert aufweisen, der größer oder gleich dem ersten Wert auf der Farbskala und gleichzeitig kleiner oder gleich dem zweiten Wert auf der Farbskala ist, die - bis auf die Extremwerte - vollständige Grauskala für eine Zuordnung zur Verfügung. Hierdurch kann ein weiteres farbliches Spreizen/ Auseinanderspreizen bei der Zuordnung der Bildpunkte zu den Grauwerten ermöglicht werden und die Kontrastverbesserung des Personenporträts weiter befördert werden.

In einer Variante des Verfahrens werden die Bildpunkte, welche als zu der gezeigten Person gehörig klassifiziert sind und einen Farbwert aufweisen, welcher größer oder gleich dem ersten Wert auf der Farbskala und gleichzeitig kleiner oder gleich dem zweiten Wert auf der Farbskala ist, jeweils einem Grauwert der Grauskala so zugeordnet, dass:
- die Bildpunkte mit einem Farbwert, welcher gleich dem ersten Wert auf der Farbskala ist, dem zweitniedrigsten Grauwert der Grauskala zugeordnet werden, und/oder
- die Bildpunkte mit einem Farbwert, welcher gleich dem zweiten Wert auf der Farbskala ist, dem zweithöchsten Grauwert der Grauskala zugeordnet werden, und/oder
- Bildpunkte mit jeweils gleichen Farbwerten jeweils dem gleichen Grauwert zugeordnet werden, und/oder
- ein Bildpunkt mit einem höheren Farbwert als ein beliebiger weiterer der als zu der gezeigten Person gehörig klassifizierten Bildpunkte, welcher ebenfalls einen Farbwert aufweist, der größer oder gleich dem ersten Wert auf der Farbskala und gleichzeitig kleiner oder gleich dem zweiten Wert auf der Farbskala ist, jeweils zu einem höheren Grauwert als der weitere Bildpunkt zugeordnet wird. (Mit anderen Worten kann ein Bildpunkt, der einen höheren Farbwert als ein beliebiger anderer Bildpunkt des dritten vorbestimmten Anteils aufweist, zu einem höheren Grauwert als der andere Bildpunkt zugeordnet werden.)

Ein Vorteil hierbei ist, dass der vollständige Wertebereich der Grauskala zur Verbesserung des Kontrastes des Personenporträts genutzt werden kann.

Die Zuordnung der Bildpunkte zu den Grauwerten kann durch eine lineare Funktion, welche einen Bildpunkt mit einem Farbwert jeweils zu einem Grauwert zuweist, geschehen. Insbesondere kann eine lineare Spreizung beim Zuordnen der Bildpunkte mit den Farbwerten zu den Grauwerten der Grauskala durchgeführt werden.

In einer alternativen Ausführungsform kann die Zuordnung der Bildpunkte mit den Farbwerten der Farbskala zu den Grauwerten der Grauskala in Abhängigkeit der relativen Häufigkeit der einzelnen Farbwerte erfolgen, sodass der Werteabstand der den Bildpunkten zugewiesenen Grauwerte auf der Grauskala in Abhängigkeit der relativen Häufigkeit der den Bildpunkten auf der Farbskala jeweils zugeordneten Farbwerte variiert. Genauer gesagt können Bildpunkte des Personenporträts mit relativ häufig auftretenden Farbwerten jeweils Grauwerten auf der Grauskala zugeordnet werden, welche zum nächsthören und/oder nächstniederen zugeordneten Grauwert auf der Grauskala mit einem größeren Werteabstand auf der Grauskala beabstandet sind als Bildpunkte, deren Farbwerte relativ weniger häufig im Personenporträt auftreten. Sind hierbei ein Bildpunkt, welcher einem relativ häufig auftretenden Farbwert aufweist und ein Bildpunkt, welcher einem relativ selten auftretenden Farbwert aufweist, jeweils zu auf der Grauwertskala einander benachbarten Grauwerten zugeordnet, so richtet sich der zwischen den Grauwerten festzulegende Werteabstand nach dem Bildpunkt mit dem relativ häufigeren Farbwert.

Als relativ häufig kann zum Beispiel ein Farbwert angesehen werden, welcher mehr als 5% aller zu einem Grauwert zuzuordnenden Bildpunkte zugeordnet ist. ("Häufigkeitswert") Als relativ weniger häufig kann zum Beispiel ein Farbwert angesehen werden, welcher bis zu 5% aller zu einem Grauwert zuzuordnenden Bildpunkte zugeordnet ist.

Der Häufigkeitswert, welcher definiert, ob ein Farbwert als häufig oder als weniger häufig anzusehen ist, kann je nach Ausführungsform des Verfahrens festgelegt werden, zum Beispiel im Bereich zwischen 1% und 10% der Farbwerte, wobei der Häufigkeitswert unter Beachtung der verwendeten Farbskala zu wählen ist. Ein Farbwert auf einer Farbskala, welche eine große Anzahl von einzelnen Farbwerten aufweist, ist bereits ab einer niedrigeren absoluten Häufigkeit des einzelnen Farbwertes als relativ häufig anzusehen, als ein Farbwert auf einer Farbskala, welche eine geringe Anzahl von einzelnen Farbwerten aufweist.

Ein Vorteil hierbei ist, dass die Gewichtung der Häufigkeit der den Bildpunkten zugewiesenen Farbwerte die Konturen eines erstellten Graustufenpersonenporträts noch deutlicher hervortreten lässt.

In einer Variante des Verfahrens ist der Hintergrund der Person einfarbig, insbesondere einfarbig rot oder blau oder grün. Ein Vorteil hierbei ist, dass ein einfarbiger, insbesondere einfarbig roter oder blauer oder grüner Hintergrund besonders gut für eine Unterscheidung von der gezeigten Person geeignet ist, insbesondere da ein roter, blauer oder grüner Hintergrund in einem zumindest annähernd echtfarbigen Personenporträt deutlich von der natürlichen Farbgebung eines menschlichen Gesichtes unterscheidbar ist.

In einer Variante umfasst das Verfahren weiter den Schritt:
c0) Einfarbiges Einfärben des Hintergrunds der gezeigten Person, insbesondere einfarbiges Einfärben des Hintergrunds in rot oder blau oder grün.

Ein Vorteil hierbei ist, dass das Einfärben des Hintergrunds der gezeigten Person in einer Farbe, vorteilhafterweise in einer von der natürlichen Farbgebung einer menschlichen Person /eines menschlichen Gesichtes unterscheidbaren Farbe, eine verbesserte Unterscheidbarkeit des Hintergrunds der gezeigten Person und der gezeigten Person während des weiteren Verfahrens ermöglicht.

In einer Variante des Verfahrens geschieht das Einfärben des Hintergrunds der Person durch das Zuweisen eines vorbestimmten Farbwertes der Farbskala an die Bildpunkte des segmentierten Personenporträts, welche den am relativ häufigsten den einzelnen Bildpunkten des segmentierten Personenporträts zugewiesenen Farbwert aufweisen. Mit anderen Worten kann gesagt werden, dass die Bildpunkte mit dem häufigsten Farbwert einheitlich einem vorbestimmten Farbwerte der Farbskala zugewiesen werden bzw. der häufigste Farbwert in den vorbestimmten Farbwert der Farbskala geändert wird.

Alternativ kann das Einfärben des Hintergrunds der Person durch das Zuweisen eines vorbestimmten Farbwertes der Farbskala an die Bildpunkte des segmentierten Personenporträts, welche den am relativ häufigsten Farbwert des segmentierten Personenporträts aufweisen oder welche einen in einem vorbestimmten Wertebereich auf der Farbskala an den relativ häufigsten Farbwert angrenzenden Farbwert aufweisen, geschehen.

Ein Vorteil hierbei ist, dass insbesondere kleinere Farbabweichungen des erfassten Hintergrunds der Person bei der Einfärbung berücksichtigt werden können.

Der vorbestimmte Wertebereich auf der Farbskala kann zum Beispiel den am relativ häufigsten auftretenden Farbwert sowie die 3 auf der Farbskala jeweils nächstliegenden Farbwerte oberhalb des am relativ häufigsten auftretenden Farbwertes und die 3 auf der Farbskala jeweils nächstliegenden Farbwerte unterhalb des am relativ häufigsten auftretenden Farbwertes umfassen. Der vorbestimmte Wertebereich kann in einer Weiterbildung durch einen Anwender des Verfahrens bestimmt werden.

In einer Ausführungsform kann das Einfärben des Hintergrunds der Person durch das Einfärben aller Bildpunkte des segmentierten Personenporträts, welche denselben Farbwert wie ein im äußersten oberen Eckbereich des Personenporträts positionierter Eck-Bildpunkt aufweisen und an diesen unmittelbar oder in einer ununterbrochenen Folge räumlich aneinander angrenzender Bildpunkte mit jeweils demselben Farbwert angrenzen, geschehen.

Der Eck-Bildpunkt kann hierbei entweder der im äußersten linken oberen Eckbereich des Personenporträts positionierte Bildpunkt oder der im äußersten rechten oberen Eckbereich des Personenporträts positionierte Bildpunkt sein.

Ein Vorteil hierbei ist, dass zumindest ein im äußersten oberen Eckbereich des Personenporträts positionierter Eck-Bildpunkt als zum Hintergrund gehörig angenommen werden kann und somit eine Soll-Ausgangsfarbe des Hintergrunds der Person ermittelt werden kann. Ein weiterer Vorteil ist es, dass Bildpunkte, welche nicht zum Hintergrund sondern zur gezeigten Person gehörig zu klassifizieren sind, jedoch denselben Farbwert wie der Hintergrund der Person aufweisen, zumindest dann nicht Eingefärbt werden, wenn diese nicht räumlich angrenzend zu einem Hintergrundbildsegment bzw. einem als zum Hintergrund gehörig zu klassifizierenden Bildpunkt positioniert sind.

In einer Ausführungsform kann das Einfärben des Hintergrunds der Person durch das Einfärben aller Bildpunkte des segmentierten Personenporträts, welche denselben Farbwert wie ein im äußersten oberen Eckbereich des Personenporträts positionierter Eck-Bildpunkt aufweisen und an diesen unmittelbar oder in einer ununterbrochenen Folge räumlich aneinander angrenzender Bildpunkte mit jeweils demselben Farbwert oder einen in einem vorbestimmten Wertebereich auf der Farbskala angrenzenden Farbwert angrenzen, geschehen.

In einer Variante des Verfahrens können jene Bildpunkte des segmentierten Personenporträts als zu dem gezeigten Hintergrund einer Person gehörig klassifiziert werden, welche einen Farbwert des, insbesondere einfarbigen und/oder einfarbig eingefärbten, Hintergrunds aufweisen.

Alternativ können jene Bildpunkte des segmentierten Personenporträts als zu dem Hintergrund der gezeigten Person gehörig klassifiziert werden, welche den am relativ häufigsten Farbwert des segmentierten Personenporträts aufweisen und/oder es können jene Bildpunkte des segmentierten Personenporträts als zu dem Hintergrund der gezeigten Person gehörig klassifiziert werden, welche den am relativ häufigsten Farbwert des segmentierten Personenporträts aufweisen, oder einen in einem vorbestimmten Wertebereich auf der Farbskala an den relativ häufigsten Farbwert auf der Farbskala angrenzenden Farbwert aufweisen.

Die Bildpunkte des segmentierten Personenporträts, welche nicht als zu dem Hintergrund der gezeigten Person gehörig klassifiziert werden, können als zu der gezeigten Person gehörig klassifiziert werden.

Ein Vorteil hierbei ist, dass, insbesondere in Verbindung mit einer vorangehenden Einfärbung des Hintergrunds der Person, effizient und automatisierbar zwischen Bildpunkten, welche als zu dem Hintergrund der gezeigten Person gehörig zu klassifizieren sind und Bildpunkten, welche als zu der gezeigten Person gehörig zu klassifizieren sind, unterschieden werden kann.

Optional können die dem Hintergrund der Person zugeordneten Bildpunkte aus dem Personenporträt entfernt werden und/oder von einer Zuordnung zu einem Grauwert ausgeschlossen werden.

In einer Variante können die Bildpunkte, welche als zum Hintergrund der gezeigten Person gehörig klassifiziert sind, einheitlich dem höchsten oder dem geringsten möglichen Grauwert auf der Grauskala zugewiesen werden.

Nach dem Zuweisen der Bildpunkte, welche als zu der gezeigten Person gehörig klassifiziert sind, zu Grauwerten der Grauskala kann das Personenporträt an eine Lasermarkierungsvorrichtung übertragen werden. In einer Variante werden ausschließlich die Bildpunkte, welche als zu der gezeigten Person gehörig klassifiziert sind, an die Lasermarkierungsvorrichtung oder Lasergravurvorrichtung übertragen. In einer alternativen Variante werden alle Bildpunkte des Personenporträts an die Lasermarkierungsvorrichtung oder Lasergravurvorrichtung übertragen.

Zumindest ein Teil der beschriebenen Verfahrensschritte und/oder Varianten kann vorteilhafterweise durch ein Computerprogrammprodukt auf einem nicht flüchtigen Datenträger und mit einer zugehörigen Datenverarbeitungsvorrichtung ausgeführt werden, welche zumindest einen Teil der Verfahrensschritte ausführt und ein Graustufenbild der gezeigten Person automatisiert an eine Lasermarkierungsvorrichtung für Ausweis- und Sicherheitsdokumente abgibt.

Die beschriebenen Verfahrensschritte und/oder Varianten können insbesondere zur Herstellung eines Ausweisdokuments mit einem nach dem beschriebenen Verfahren und/oder Varianten hergestellten Personenporträt eingesetzt werden.

### Kurzbeschreibung der Zeichnungen

Weitere Ziele, Merkmale, Vorteile und Anwendungsmöglichkeiten des hier offenbarten Verfahrens ergeben sich aus der nachfolgenden Beschreibung von in Bezug auf die hier vorgestellte Offenbarung nicht einschränkend zu verstehenden Ausführungsbeispielen und den zugehörigen Zeichnungen.
- Fig. 1: zeigt ein Beispiel für erfasstes und segmentiertes Personenporträt, welches einen Teil einer Person und einen Hintergrund der Person zeigt.
- Fig. 2: zeigt ein Beispiel für erfasstes und segmentiertes Personenporträt mit einem farbig eingefärbten Hintergrund.
- Fig. 3: zeigt ein Beispiel für erfasstes und segmentiertes Personenporträt, wobei die als zu dem Hintergrund der Person gehörig klassifizierten Bildpunkte entfernt wurden.
- Fig. 4: zeigt ein Graustufen-Personenporträt mit einem verbesserten Kontrast, wobei die als zu dem Hintergrund der Person gehörig klassifizierten Bildpunkte entfernt wurden.
- Fig. 5 A/B: zeigen weitere Graustufen-Personenporträts mit einem verbesserten Kontrastwerten.

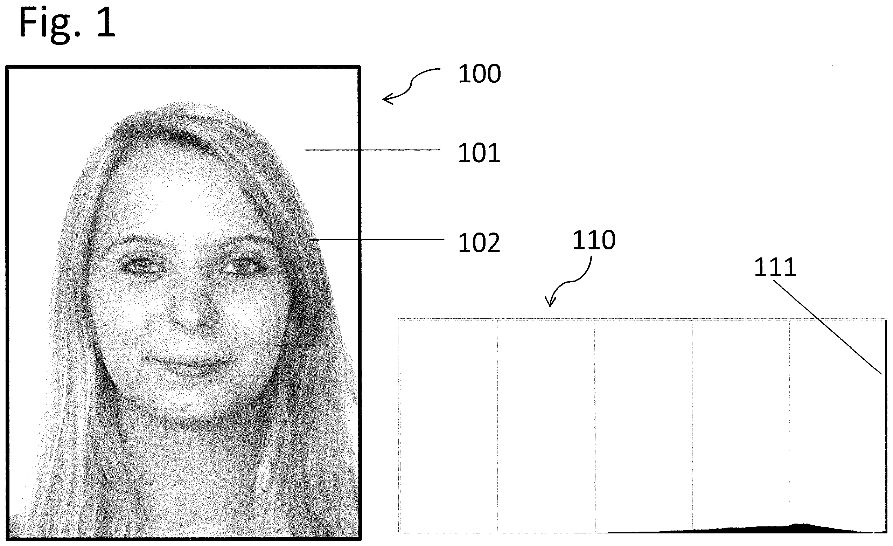

Figur 1 zeigt ein erfasstes Personenporträts 100 für ein Ausweisdokument. Das Personenporträt 100 zeigt einen Hintergrund 101 und eine Person 102. Im gezeigten Beispiel ist der Hintergrund 101 einfarbig weiß. In anderen Beispielen kann der Hintergrund der gezeigten Person eine andere Farbe haben, zum Beispiel rot oder blau oder grün. Das Personenporträt 100 ist in eine Vielzahl von Bildpunkten ("Pixel") segmentiert.

Das gezeigte Personenporträt 100 ist ein Farbbild. Farbbilder im Sinne der Erfindung sind hierbei ausdrücklich auch solche Bilder, die ausschließlich Farbwerte aufweisen, welche nur einem Teil der Farbskala bzw. einem Teil eines Wertebereichs einer Farbskala zugeordnet sind. Mit anderen Worten können auch Personenporträts, welche ausschließlich Bildpunkte aufweisen, die ausschließlich einem Teilbereich einer Farbskala zugeordnet sind, Farbbilder im Sinne der Erfindung sein. Ausdrücklich sind hierdurch auch Farbbilder/ Personenporträts umfasst, die ausschließlich Graustufen-Farbwerte bzw. "graue Farbwerte" auf einer Farbskala aufweisen.

Weiter zeigt Figur 1 ein Farbwertehistogramm 110. Das Farbwertehistogramm 110 zeigt die Häufigkeitsverteilung der Farbwerte, welche den einzelnen Bildpunkten des Personenporträts 100 jeweils zugeordnet sind. Je häufiger ein Farbwert jeweils Bildpunkten des Personenporträts 100 zugeordnet ist, desto größer ist der entsprechende Histogramm-Wert des Farbwertes.

Der häufigste den Bildpunkten des Personenporträts 100 zugeordnete Farbwert ist im gezeigten Beispiel der "weiße" Farbwert 111. Insbesondere die Bildpunkte des Hintergrunds 101 weisen diesen Farbwert 111 auf, sodass dieser der insgesamt relativ häufigste zugeordnete Farbwert des gesamten Personenporträts 100 ist.

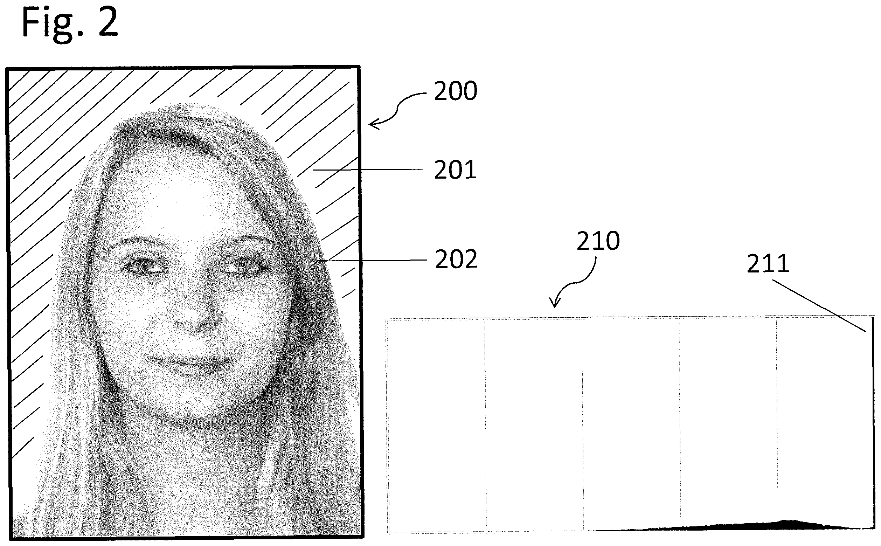

Fig. 2 zeigt ein bearbeitetes Personenporträt 200. Das Personenporträt 200 zeigt die Person 202, welche mit der in Fig. 1 gezeigten Person 102 identisch ist. Der Hintergrund 201 des Personenporträts 200 ist einfarbig eingefärbt. (In der Fig. 2 durch die Schraffur des hintergrunds 201 dargestellt.) Hierzu wurde eine Flutfüllung des Hintergrunds 201 durgeführt, bei der jeweils räumlich aneinandergrenzende Bildpunkte mit einem gleichen und/oder nahezu gleichen Farbwert einheitlich einem vorbestimmten Farbwert zugewiesen wurden.

Der Hintergrund 201 kann zum Beispiel grün oder rot oder blau eingefärbt werden. Eine andere Einfärbung ist in anderen Ausführungsbeispielen möglich.

In einer Verfahrensvariante kann der Farbwert der einzufärbenden Bildpunkte, zumindest teilweise, auch unverändert bleiben. Zum Beispiel kann ein im Wesentlichen weißer Hintergrund einfarbig weiß eingefärbt werden, um Bildpunkten mit erfassungsbedingt geringfügig voneinander abweichenden Farbwerten einheitlich einen vorbestimmten Farbwert zuzuweisen. Hierbei verbleibt der Farbwert von zumindest einem Teil der Bildpunkte unverändert (weiß).

Der Farbwert 211 des eingefärbten Hintergrunds 201 ist als der am relativ häufigsten auftretende Farbwert im Farbwerthistogramm 210.

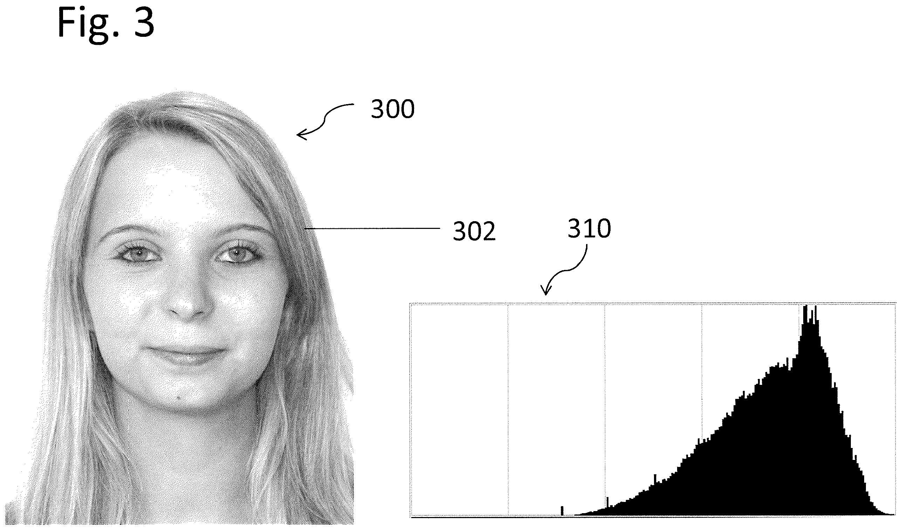

Fig. 3 zeigt ein weiter bearbeitetes Personenporträt 300. Das Personenporträt zeigt die Person 302, welche mit der in Fig. 2 gezeigten Person 202 identisch ist. Der Hintergrund 201 wurde jedoch aus dem Personenporträt entfernt. Hierzu wurden alle Bildpunkte des Personenporträts, welche den Farbwert 211 aufwiesen (vergleiche Fig. 2) zunächst als zum Hintergrund der gezeigten Person gehörig klassifiziert und anschließend gelöscht.

Eine Farbwertverteilung der verbleibenden Bildpunkte ist durch das Farbwertehistogramm 310 gezeigt. Das Farbwertehistogramm 310 bildet denselben Wertebereich der Farbskala ab wie die Fig. 1 und Fig. 2 gezeigten Farbwertehistogramme. Der Maßstab der Häufigkeitsverteilung ist jedoch gegenüber den zuvor gezeigten Farbwertehistogrammen abweichend gewählt. Durch die Löschung der Bildpunkte mit dem relativ häufigsten Farbwert bzw. der Bildpunkte, welche als zum Hintergrund der Person gehörig klassifiziert wurden, ist die Darstellung der Farbwertverteilung mit dem geänderten Maßstab der Häufigkeitsverteilung ohne Informationsverlust möglich.

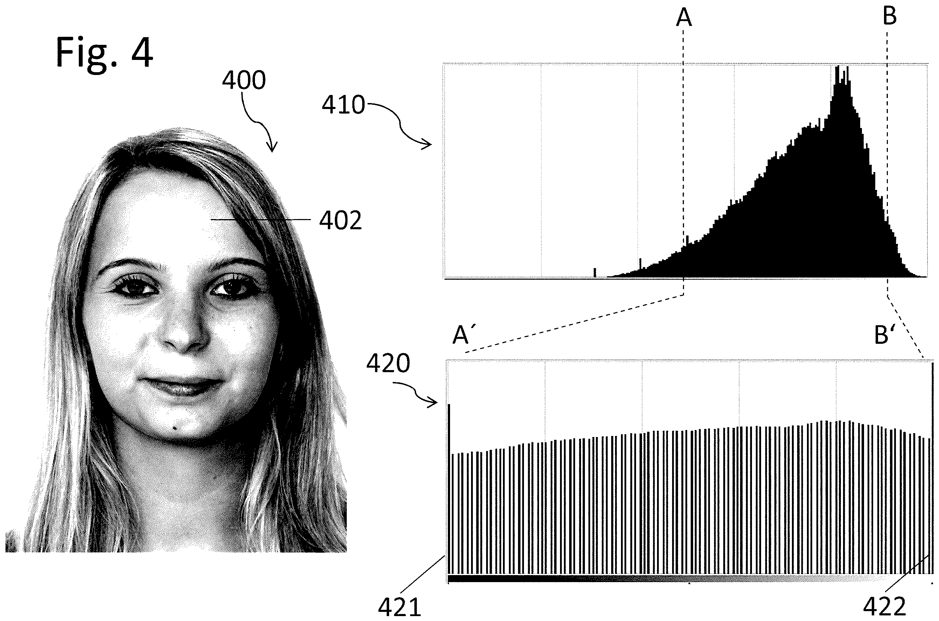

Fig. 4 zeigt ein Graustufen-Personenporträt 400 mit einem verbesserten Kontrast. Zur Erstellung dieses verbesserten Graustufen-Personenporträts wird zunächst ein erster Wert A auf der Farbskala und ein zweiter Wert B auf der Farbskala bzw. ein Wertebereich A-B auf der Farbskala ermittelt. Der Wertebereich A-B ist im Farbwertehistogramm 410, welches zum in Fig. 3 gezeigten Farbwertehistogramm korrespondiert, gezeigt.

Der Wertebereich A-B ist im gezeigten Beispiel so ermittelt, dass ein Teil der Bildpunkte des Personenporträts einen Farbwert zwischen dem Farbwert A und dem Farbwert B aufweist, während jeweils ein Teil der Bildpunkte des Personenporträts Farbwerte unterhalb und oberhalb des Wertebereichs A-B aufweist. Der Wertebereich kann je nach Anwendungserfordernis frei gewählt werden. Das Vorhandensein von Bildpunkten mit Farbwerten unterhalb und/oder oberhalb des Wertebereichs ist hierbei nicht in allen Ausführungsformen notwendig.

In einem Beispiel kann der Wertbereich A-B zwischen zwei vorbestimmten Farbwerten A, B auf der Farbskala festgelegt sein. In einem anderen Beispiel kann der Wertebereich A-B so gewählt werden, dass jeweils ein vorbestimmter Prozentsatz, zum Beispiel 1% oder 4%, der Bildpunkte des Personenporträts/ der gezeigten Person jeweils Farbwerte unterhalb des ersten Wertes A und/oder oberhalb des zweiten Wertes B aufweist.

Bildpunkte des Personenporträts 400, welche einen Farbwert außerhalb des Wertebereiches A-B aufweisen, werden jeweils einem der beiden Extremwerte 421, 422 einer Grauskala zugewiesen. Bildpunkte mit einem Farbwert unterhalb des ersten Wertes A werden im gezeigten Beispiel einheitlich dem niedrigsten möglichen Wert 421 auf der Grauskala zugewiesen. Bildpunkte mit einem Farbwert oberhalb des zweiten Wertes B werden im gezeigten Beispiel einheitlich dem höchsten möglichen Wert 422 auf der Grauskala zugewiesen.

Im gezeigten Beispiel hat die Grauskala ebenso viele Grauwerte wie die Farbskala Farbwerte umfasst.

Bildpunkte mit einem Farbwert, welche durch den Wertebereich A-B umfasst sind (bzw. einen Farbwert größer oder gleich dem ersten Wert A und kleiner oder gleich dem zweiten Wert B aufweisen), werden jeweils zu einem Grauwert der Grauskala zugewiesen. Bildpunkte mit einem jeweils höheren Farbwert auf der Farbskala werden hierbei zu einem höheren Grauwerte der Grauskala zugewiesen als Bildpunkte mit einem niedrigeren Farbwert auf der Farbskala. Die Wertereihenfolge der Farbwerte der Bildpunkte bestimmt somit die Reihenfolge bei der Zuordnung der Bildpunkte zu den Grauwerten der Grauskala. Die Wertereihenfolge der Farbwerte der Bildpunkte stimmt somit mit der Wertereihenfolge der Grauwerte der Bildpunkte überein.

Die Grauwerte, zu denen die Bildpunkte des Personenporträts 400 der gezeigten Person 402 zugeordnet werden, sind jedoch jeweils mit einem größeren Werteabstand auf der Grauskala voneinander beabstandet als die Farbwerte der Bildpunkte auf der Farbwertskala. Diese Spreizung des Wertebereiches A-B der Farbwertskala über den vollständigen Wertbereich A'-B' der Grauskala verbessert den Kontrast des Graustufen-Personenporträts 400.

Das Grausstufen-Personenporträt 400 zeigt die Person 402. Jeder Bildpunkt der Person 402 hat den Grauwert, zu dem der jeweilige Bildpunkt zuvor zugeordnet wurde. Die Grauwerte, zu denen die Bildpunkte zugeordnet werden, nutzen den gesamten Wertebereich der Grauskala aus. Das Graustufen-Personenporträt 400 ist aufgrund der jeweils auf der Grauskala voneinander beabstandeten Grauwerte kontraststärker als die in den Fig. 1 - 3 gezeigten Farbbilder, wobei die Bildpunkte, welche als zu dem Hintergrund gehörig klassifiziert wurden, die Kontrastverstärkung nicht beeinflusst haben.

Das Grausstufen-Personenporträt 400 ist insbesondere dazu geeignet, mit einer Lasermarkierungsvorrichtung oder Lasergravurvorrichtung unveränderlich auf ein Ausweis- oder Sicherheitsdokument übertragen zu werden.

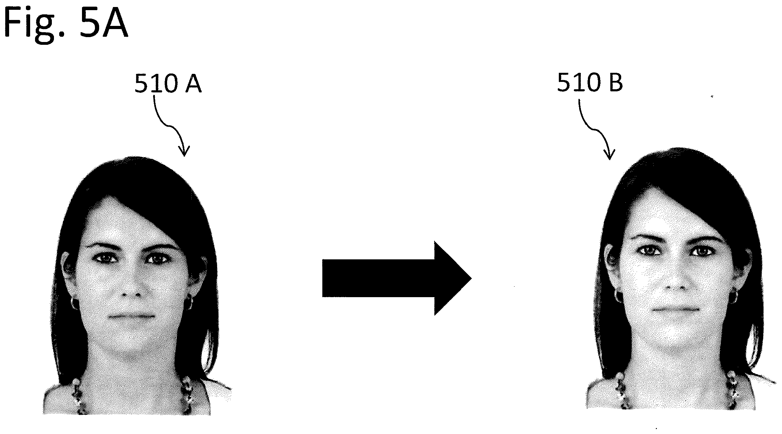

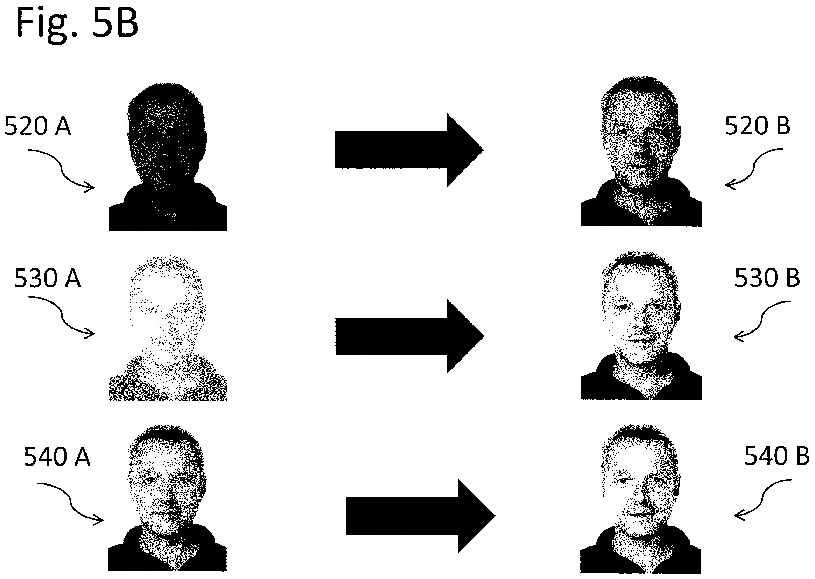

Die Fig. 5A und 5B zeigen weitere erfasste Personenporträts 510A, 520A, 530A, 540A für Ausweisdokumente. Die Personenporträts 510A, 520A, 530A, 540A zeigen jeweils unterschiedliche Aufnahmen von Personen mit unterschiedlichen Kontrasteigenschaften. Die ebenfalls dargestellten Grausstufen-Personenporträts 510B, 520B, 530B, 540B wurden analog zu den in den Fig. 2 - 4 dargestellten Verfahrensschritten erstellt und zeigen jeweils ein im Vergleich zu den Personenporträts 510A, 520A, 530A, 540A kontraststärkeres Grausstufen-Personenporträt, welches besser dazu geeignet ist, mit einer Lasermarkierungsvorrichtung oder Lasergravurvorrichtung auf ein Ausweis- oder Sicherheitsdokument übertragen zu werden.

Die vorangehend beschriebenen Beispiele der Vorrichtung sowie deren Aufbau- und Betriebsaspekte dienen lediglich dem besseren Verständnis der Struktur, der Funktionsweise und der Eigenschaften der Erfindung. Die Fig. sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Vorgehensweise zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Beispielen im Text, in den Ansprüchen und in den Fig. umfasst. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

## Patentansprüche

1. Ein computerimplementiertes Verfahren zur Herstellung eines Personenporträts (200) für ein Ausweisdokument, umfassend die Schritte:
a) Erfassen eines Personenporträts (200), welches zumindest einen Teil einer Person (202) und einen Hintergrund (201) der Person zeigt;
b) Segmentieren des Personenporträts (200) in Bildpunkte, wobei jedem Bildpunkt ein Farbwert einer Farbskala zugeordnet ist;
c) Klassifizieren der einzelnen Bildpunkte jeweils entweder als zu der gezeigten Person (202) gehörig oder als zu dem gezeigten Hintergrund (201) der Person gehörig;
d) Ermitteln eines ersten Wertes (A) auf der Farbskala und eines zweiten Wertes (B) auf der Farbskala;
e) Zuordnen der Bildpunkte, welche als zu der gezeigten Person (202) gehörig klassifiziert sind, zu einem Grauwert einer Grauskala, wobei
- Bildpunkte mit einem Farbwert unterhalb des ersten Wertes (A) auf der Farbskala jeweils zu dem niedrigsten möglichen Grauwert der Grauskala zugeordnet werden, und
- Bildpunkte mit einem Farbwert oberhalb des zweiten Wertes (B) auf der Farbskala jeweils zu dem höchsten möglichen Grauwert der Grauskala zugeordnet werden, und
- Bildpunkte mit Farbwerten, die größer oder gleich dem ersten Wert (A) auf der Farbskala und gleichzeitig kleiner oder gleich dem zweiten Wert (B) auf der Farbskala sind, jeweils einem Grauwert zwischen dem niedrigsten möglichen Grauwert und dem höchsten möglichen Grauwert zugeordnet werden;
f) Ausgeben von zumindest von jenen Bildpunkten, welche einem Grauwert der Grauskala zugeordnet sind; und
c0) Einfarbiges Einfärben des durch das erfasste Personenporträt gezeigten Hintergrunds (201), wobei
das Einfärben des Hintergrunds (201) der gezeigten Person (202) durch das Zuweisen eines vorbestimmten Farbwertes der Farbskala an die Bildpunkte des segmentierten Personenporträts, welche den am relativ häufigsten den einzelnen Bildpunkten des segmentierten Personenporträts (200) zugewiesenen Farbwert aufweisen, geschieht, oder
das Einfärben des Hintergrunds (201) der gezeigten Person (202) durch das Zuweisen eines vorbestimmten Farbwertes der Farbskala an die Bildpunkte des segmentierten Personenporträts, welche den am relativ häufigsten Farbwert des segmentierten Personenporträts (200) aufweisen oder welche einen in einem vorbestimmten Wertebereich auf der Farbskala an den relativ häufigsten Farbwert angrenzenden Farbwert aufweisen, geschieht, oder
das Einfärben des Hintergrunds (201) der gezeigten Person (202) durch das Zuweisen eines vorbestimmten Farbwertes der Farbskala an die Bildpunkte des segmentierten Personenporträts (200), welche denselben Farbwert wie ein im äußersten oberen Eckbereich des Personenporträts (200) positionierter Eck-Bildpunkt aufweisen und an diesen unmittelbar oder in einer ununterbrochenen Folge räumlich aneinander angrenzender Bildpunkte mit jeweils demselben Farbwert angrenzen, geschieht, oder
das Einfärben des Hintergrunds (201) der gezeigten Person (202) durch das Zuweisen eines vorbestimmten Farbwertes der Farbskala an die Bildpunkte des segmentierten Personenporträts (200), welche denselben Farbwert oder einen in einem vorbestimmten Wertebereich auf der Farbskala angrenzenden Farbwert wie ein im äußersten oberen Eckbereich des Personenporträts (200) positionierter Eck-Bildpunkt aufweisen und an diesen unmittelbar oder in einer ununterbrochenen Folge aneinander angrenzender Bildpunkte mit jeweils demselben Farbwert oder einen in einem vorbestimmten Wertebereich auf der Farbskala angrenzenden Farbwert räumlich angrenzen, geschieht.

2. Computerimplementiertes Verfahren zur Herstellung eines Personenporträts für ein Ausweisdokument nach Anspruch 1, wobei in Schritt c0) das einfarbige Einfärben ein einfarbiges Einfärben des gezeigten Hintergrunds (201) der Person in rot oder blau oder grün ist.

3. Computerimplementiertes Verfahren zur Herstellung eines Personenporträts für ein Ausweisdokument nach Anspruch 1 oder 2, wobei
die Farbskala 256 Farbwerte hat, und/oder
die Grauskala 256 Grauwerte hat.

4. Computerimplementiertes Verfahren zur Herstellung eines Personenporträts für ein Ausweisdokument nach einem der vorangegangenen Ansprüche, wobei der erste Wert (A) auf der Farbskala und der zweite Wert (B) auf der Farbskala so ermittelt werden, dass:
- der zweite Wert (B) auf der Farbskala größer als der erste Wert (A) auf der Farbskala ist, und/oder
- ein erster vorbestimmter Anteil der als zu der gezeigten Person (202) gehörig klassifizierten Bildpunkte jeweils Farbwerte unterhalb des ersten Wertes (A) auf der Farbskala aufweist, und/oder
- ein zweiter vorbestimmter Anteil der als zu der gezeigten Person (202) gehörig klassifizierten Bildpunkte jeweils Farbwerte aufweist, die größer oder gleich dem ersten Wert (A) auf der Farbskala und gleichzeitig kleiner oder gleich dem zweiten Wert (B) auf der Farbskala sind, und/oder
- ein dritter vorbestimmter Anteil der als zu der gezeigten Person (202) gehörig klassifizierten Bildpunkte jeweils Farbwerte oberhalb des zweiten Wertes (B) auf der Farbskala aufweist.

5. Computerimplementiertes Verfahren zur Herstellung eines Personenporträts für ein Ausweisdokument nach einem der vorangegangenen Ansprüche, wobei
jene Bildpunkte, welche als zu der gezeigten Person (202) gehörig klassifiziert sind und einen Farbwert aufweisen, welcher größer oder gleich dem ersten Wert (A) auf der Farbskala und gleichzeitig kleiner oder gleich dem zweiten Wert (B) auf der Farbskala ist, jeweils zu einem Grauwert der Grauskala so zugeordnet, dass:
- die Bildpunkte mit einem Farbwert, welcher gleich dem ersten Wert (A) auf der Farbskala ist, dem zweitniedrigsten Grauwert der Grauskala zugeordnet werden, und/oder
- die Bildpunkte mit einem Farbwert, welcher gleich dem zweiten Wert (B) auf der Farbskala ist, dem zweithöchsten Grauwert der Grauskala zugeordnet werden, und/oder
- Bildpunkte mit jeweils gleichen Farbwerten jeweils dem gleichen Grauwert zugeordnet werden, und/oder
- ein Bildpunkt mit einem höheren Farbwert als ein beliebiger weiterer der als zu der gezeigten Person gehörig klassifizierten Bildpunkte, welcher einen Farbwert aufweist, der größer oder gleich dem ersten Wert (A) auf der Farbskala und gleichzeitig kleiner oder gleich dem zweiten Wert (B) auf der Farbskala ist, jeweils zu einem höheren Grauwert als der weitere Bildpunkt zugeordnet wird.

6. Computerimplementiertes Verfahren zur Herstellung eines Personenporträts für ein Ausweisdokument nach einem der vorangegangenen Ansprüche, wobei
der gezeigte Hintergrund (201) der Person einfarbig, insbesondere einfarbig rot oder blau oder grün, ist.

7. Computerimplementiertes Verfahren zur Herstellung eines Personenporträts für ein Ausweisdokument nach einem der vorangegangenen Ansprüche, wobei
jene Bildpunkte des segmentierten Personenporträts (200) als zu dem gezeigten Hintergrund (201) der Person gehörig klassifiziert werden, welche einen Farbwert des, insbesondere einfarbigen und/oder einfarbig eingefärbten, Personenhintergrunds aufweisen, und/oder
jene Bildpunkte des segmentierten Personenporträts (200) als zu dem gezeigten Hintergrund (201) der Person gehörig klassifiziert werden, welche den am relativ häufigsten Farbwert des segmentierten Personenporträts (200) aufweisen, und/oder
jene Bildpunkte des segmentierten Personenporträts (200) als zu dem gezeigten Hintergrund (201) der Person gehörig klassifiziert werden, welche den am relativ häufigsten Farbwert des segmentierten Personenporträts (200) oder die in einem vorbestimmten Wertebereich auf der Farbskala an den relativ häufigsten Farbwert auf der Farbskala angrenzenden Farbwerte aufweisen, und/oder
jene Bildpunkte des segmentierten Personenporträts (200) als zu der gezeigten Person (202) gehörig klassifiziert werden, welche nicht als zu dem gezeigten Hintergrund (201) der Person gehörig klassifiziert werden.

8. Computerprogrammprodukt auf einem nicht flüchtigen Datenträger, welches dazu geeignet und bestimmt ist, ein Verfahren nach einem der vorangegangenen Ansprüche mit einer elektronischen Datenverarbeitungsvorrichtung auszuführen.

## Claims

1. A computer-implemented method for producing a person portrait (200) for an identification document, comprising the steps of:
(a) capturing a person portrait (200) showing at least a portion of a person (202) and a background (201) of the person;
b) segmenting the person portrait (200) into image points, each image point being assigned a colour value of a colour scale;
c) classifying the individual image points respectively either as belonging to the person (202) shown or as belonging to the background (201) of the person shown;
d) determining a first value (A) on the colour scale and a second value (B) on the colour scale;
e) assigning the image points classified as belonging to the person (202) shown to a gray value of a gray scale, wherein
- image points with a colour value below the first value (A) on the colour scale are each assigned to the lowest possible gray value of the gray scale, and
- image points with a colour value above the second value (B) on the colour scale being assigned in each case to the highest possible gray value of the gray scale, and
- image points with colour values which are greater than or equal to the first value (A) on the colour scale and at the same time less than or equal to the second value (B) on the colour scale are each assigned to a gray value between the lowest possible gray value and the highest possible gray value;
f) outputting at least those image points which are assigned to a gray value of the gray scale; and
c0) monochromatic colouring of the background (201) shown by the detected person portrait, wherein
the colouring of the background (201) of the person (202) shown is done by assigning a predetermined colour value of the colour scale to the image points of the segmented person portrait that have the most relative colour value assigned to the individual image points of the segmented person portrait (200), or
the colouring of the background (201) of the displayed person (202) is done by assigning a predetermined colour value of the colour scale to the image points of the segmented person portrait which have the relatively most frequent colour value of the segmented person portrait (200) or which have a colour value adjacent to the relatively most frequent colour value in a predetermined value range on the colour scale, or
the colouring of the background (201) of the person (202) shown is effected by assigning a predetermined colour value of the colour scale to the image points of the segmented person portrait (200) which have the same colour value as a corner image point positioned in the outermost upper corner region of the person portrait (200) and are adjacent thereto directly or in an uninterrupted sequence of spatially adjacent image points each having the same colour value, or
the colouring the background (201) of the person (202) shown by assigning a predetermined colour value of the colour scale to the image points of the segmented person portrait (200), which have the same colour value or a colour value adjacent in a predetermined value range on the colour scale as a corner image point positioned in the outermost upper corner region of the person portrait (200) and are spatially adjacent thereto directly or in an uninterrupted sequence of adjacent image points each having the same colour value or a colour value adjacent in a predetermined value range on the colour scale.

2. The computer-implemented method for producing a portrait of a person for an identification document according to claim 1, wherein in step c0) the monochromatic colouring is a monochromatic colouring of the shown background (201) of the person in red or blue or green.

3. The computer-implemented method for producing a portrait of a person for an identity document according to claim 1 or 2, wherein
the colour scale has 256 colour values, and/or
the gray scale has 256 gray values.

4. The computer-implemented method for producing a person portrait for an identification document according to any one of the preceding claims, wherein the first value (A) on the colour scale and the second value (B) on the colour scale are determined such that:
- the second value (B) on the colour scale is greater than the first value (A) on the colour scale, and/or
- a first predetermined proportion of the image points classified as belonging to the displayed person (202) each have colour values below the first value (A) on the colour scale, and/or
- a second predetermined portion of the image points classified as belonging to the displayed person (202) each has colour values that are greater than or equal to the first value (A) on the colour scale and at the same time less than or equal to the second value (B) on the colour scale, and/or
- a third predetermined portion of the image points classified as belonging to the displayed person (202) have respective colour values above the second value (B) on the colour scale.

5. The ccomputer-implemented method for producing a portrait of a person for an identity document according to any one of the preceding claims, wherein
those image points which are classified as belonging to the person shown (202) and have a colour value which is greater than or equal to the first value (A) on the colour scale and at the same time less than or equal to the second value (B) on the colour scale are each assigned to a gray value of the gray scale such that:
- the image points having a colour value equal to the first value (A) on the colour scale are assigned to the second lowest gray value of the gray scale, and/or
- the image points with a colour value which is equal to the second value (B) on the colour scale are assigned to the second highest gray value of the gray scale, and/or
- image points each having the same colour value are assigned to the same gray value, and/or
- an image point with a higher colour value than any further one of the image points classified as belonging to the person shown, which has a colour value which is greater than or equal to the first value (A) on the colour scale and at the same time less than or equal to the second value (B) on the colour scale, is assigned in each case to a higher gray value than the further image point.

6. The computer-implemented method for producing a portrait of a person for an identity document according to any one of the preceding claims, wherein
the background (201) shown of the person is monochromatic, in particular monochromatic red or blue or green.

7. The computer-implemented method for producing a person portrait for an identification document according to any one of the preceding claims, wherein
those image points of the segmented portrait of a person (200) are classified as belonging to the displayed background (201) of the person, which have a colour value of the, in particular monochrome and/or monochrome coloured, background of the person, and/or
those image points of the segmented person portrait (200) are classified as belonging to the displayed background (201) of the person which have the relatively most frequent colour value of the segmented person portrait (200), and/or
those image points of the segmented person portrait (200) are classified as belonging to the displayed background (201) of the person which have the relatively most frequent colour value of the segmented person portrait (200) or the colour values adjoining the relatively most frequent colour value on the colour scale in a predetermined range of values on the colour scale, and/or
those image points of the segmented person portrait (200) are classified as belonging to the displayed person (202) which are not classified as belonging to the displayed background (201) of the person.

8. The computer program product on a non-volatile data carrier, which is suitable and intended for carrying out a method according to any of the preceding claims with an electronic data processing device.

## Revendications

1. Un procédé mis en oeuvre par ordinateur pour produire un portrait de personne (200) pour un document d'identité, comprenant les étapes consistant à :
a) capturer un portrait de personne (200) qui montre au moins une partie d'une personne (202) et un arrière-plan (201) de la personne ;
b) segmenter le portrait de la personne (200) en points d'image, chaque point d'image étant associé à une valeur de couleur d'une échelle de couleurs ;
c) classer chaque point d'image soit comme appartenant à la personne (202) montrée, soit comme appartenant à l'arrière-plan (201) montré de la personne ;
d) déterminer une première valeur (A) sur l'échelle de couleurs et une deuxième valeur (B) sur l'échelle de couleurs ;
e) associer les points d'image classés comme appartenant à la personne (202) montrée à une valeur de gris d'une échelle de gris, dans laquelle
- les points d'image ayant une valeur de couleur inférieure à la première valeur (A) sur l'échelle de couleurs sont respectivement affectés à la valeur de gris la plus basse possible de l'échelle de gris, et
- les points d'image avec une valeur de couleur supérieure à la deuxième valeur (B) sur l'échelle des couleurs sont respectivement affectés à la valeur de gris la plus élevée possible de l'échelle des gris, et
- les points d'image ayant des valeurs de couleur supérieures ou égales à la première valeur (A) de l'échelle de couleurs et simultanément inférieures ou égales à la deuxième valeur (B) de l'échelle de couleurs sont respectivement associés à une valeur de gris comprise entre la valeur de gris la plus basse possible et la valeur de gris la plus haute possible ;
f) sortie d'au moins les points d'image associés à une valeur de gris de l'échelle de gris ; et
c0) la coloration en une seule couleur de l'arrière-plan (201) montré par le portrait de personne capturé, dans lequel
la coloration de l'arrière-plan (201) de la personne (202) montrée est effectuée en attribuant une valeur de couleur prédéterminée de l'échelle de couleurs aux points d'image du portrait segmenté de la personne qui ont la valeur de couleur attribuée le plus souvent de manière relative aux points d'image individuels du portrait segmenté de la personne (200), ou
la coloration de l'arrière-plan (201) de la personne montrée (202) est effectuée en attribuant une valeur de couleur prédéterminée de la gamme de couleurs aux points d'image du portrait segmenté de la personne qui ont la valeur de couleur la plus fréquente du portrait segmenté de la personne (200) ou qui ont une valeur de couleur adjacente à la valeur de couleur la plus fréquente dans une plage de valeurs prédéterminée sur la gamme de couleurs, ou
la coloration de l'arrière-plan (201) de la personne (202) montrée est effectuée en attribuant une valeur de couleur prédéterminée de l'échelle de couleurs aux points d'image du portrait de personne segmenté (200) qui ont la même valeur de couleur qu'un pixel de coin positionné dans la zone de coin supérieure extrême du portrait de personne (200) et qui sont directement adjacents à celui-ci ou dans une séquence ininterrompue de points d'image spatialement adjacents ayant chacun la même valeur de couleur, ou
la coloration de l'arrière-plan (201) de la personne montrée (202) par l'attribution d'une valeur de couleur prédéterminée de la gamme de couleurs aux points d'image du portrait segmenté de la personne (200), qui ont la même valeur de couleur ou une valeur de couleur adjacente dans une plage de valeurs prédéterminée sur l'échelle de couleurs qu'un pixel de coin positionné dans la zone de coin supérieure extrême du portrait de personne (200) et qui sont spatialement adjacents à celui-ci directement ou dans une séquence ininterrompue de points d'image adjacents ayant chacun la même valeur de couleur ou une valeur de couleur adjacente dans une plage de valeurs prédéterminée sur l'échelle de couleurs.

2. Le procédé mis en oeuvre par ordinateur pour la réalisation d'un portrait de personne pour un document d'identité selon la revendication 1, dans lequel, à l'étape c0), le coloriage monochrome est un coloriage monochrome du l'arrière-plan (201) de la personne présenté en rouge ou en bleu ou en vert.

3. Le procédé mis en oeuvre par ordinateur pour réaliser un portrait de personne pour un document d'identité selon la revendication 1 ou 2, dans lequel
l'échelle de couleurs a 256 valeurs de couleur, et/ou
l'échelle de gris a 256 valeurs de gris.

4. Le procédé mis en oeuvre par ordinateur pour la réalisation d'un portrait de personne pour un document d'identité selon l'une des revendications précédentes, dans lequel la première valeur (A) sur l'échelle de couleurs et la deuxième valeur (B) sur l'échelle de couleurs sont déterminées de telle sorte que :
- la deuxième valeur (B) sur l'échelle de couleurs est supérieure à la première valeur (A) sur l'échelle de couleurs, et/ou
- une première partie prédéterminée des points d'image classés comme appartenant à la personne montrée (202) présente respectivement des valeurs chromatiques inférieures à la première valeur (A) sur l'échelle des couleurs, et/ou
- une deuxième partie prédéterminée des points d'image classés comme appartenant à la personne montrée (202) présente respectivement des valeurs chromatiques supérieures ou égales à la première valeur (A) sur l'échelle de couleurs et simultanément inférieures ou égales à la deuxième valeur (B) sur l'échelle de couleurs, et/ou
- une troisième proportion prédéterminée des points d'image classés comme appartenant à la personne (202) montrée présente respectivement des valeurs chromatiques supérieures à la deuxième valeur (B) sur l'échelle des couleurs.

5. Le procédé mis en oeuvre par ordinateur pour la réalisation d'un portrait de personne pour un document d'identité selon l'une des revendications précédentes, dans lequel
les points d'image qui sont classés comme appartenant à la personne (202) montrée et qui présentent une valeur de couleur qui est supérieure ou égale à la première valeur (A) sur l'échelle de couleurs et en même temps inférieure ou égale à la deuxième valeur (B) sur l'échelle de couleurs, sont affectés chacun à une valeur de gris de l'échelle de gris de telle sorte que :
- les points d'image ayant une valeur chromatique égale à la première valeur (A) sur l'échelle des couleurs sont associés à la deuxième valeur de gris la plus basse de l'échelle des gris, et/ou
- les points d'image avec une valeur chromatique égale à la deuxième valeur (B) de l'échelle des couleurs sont attribués à la deuxième valeur de gris la plus élevée de l'échelle des gris, et/ou
- des points d'image avec des valeurs de couleur identiques sont attribués respectivement à la même valeur de gris, et/ou
- un point d'image ayant une valeur chromatique plus élevée que n'importe quel autre point d'image classé comme appartenant à la personne représentée, qui présente une valeur chromatique supérieure ou égale à la première valeur (A) sur l'échelle des couleurs et simultanément inférieure ou égale à la deuxième valeur (B) sur l'échelle des couleurs, est attribué respectivement à une valeur de gris plus élevée que l'autre point d'image.

6. Le procédé mis en oeuvre par ordinateur pour réaliser un portrait de personne pour un document d'identité selon l'une des revendications précédentes, dans lequel
l'arrière-plan (201) montré de la personne est unicolore, en particulier unicolore rouge ou bleu ou vert.

7. Le procédé mis en oeuvre par ordinateur pour la réalisation d'un portrait de personne pour un document d'identité selon l'une des revendications précédentes, dans lequel
les points d'image du portrait de personne segmenté (200) sont classés comme appartenant à l'arrière-plan (201) montré de la personne, qui présentent une valeur de couleur de l'arrière-plan de la personne, en particulier unicolore et/ou coloré en une couleur, et/ou
les points d'image du portrait de personne segmenté (200) sont classés comme appartenant à l'arrière-plan (201) affiché de la personne, qui présentent la valeur de couleur relativement la plus fréquente du portrait de personne segmenté (200), et/ou
les points d'image du portrait de personne segmenté (200) sont classés comme appartenant à l'arrière-plan affiché (201) de la personne, qui présentent la valeur de couleur la plus fréquente du portrait de personne segmenté (200) ou les valeurs de couleur adjacentes à la valeur de couleur la plus fréquente sur l'échelle de couleurs dans une plage de valeurs prédéterminée sur l'échelle de couleurs, et/ou
les points d'image du portrait de personne segmenté (200) sont classés comme appartenant à la personne montrée (202) qui ne sont pas classés comme appartenant à l'arrière-plan affiché (201) de la personne.

8. Un produit programme d'ordinateur sur un support de données non volatile, apte et destiné à mettre en oeuvre un procédé selon l'une des revendications précédentes avec un dispositif électronique de traitement de données.
